# EUROPEAN PATENT APPLICATION

(11) **EP 4 746 460 A1**
(43) Date of publication of application: **20.05.2026**
(21) Application number: 25829200.2
(22) Date of filing: 02.01.2025
(51) Int. Cl.: H04W 4/70

(54) **DATA SHARING METHOD, DEVICE, MEDIUM AND PRODUCT**

(30) Priority: 19.06.2024 CN 202410802035
(71) Applicant: Huawei Technologies Co., Ltd., Shenzhen, Guangdong 518129 (CN)
(72) Inventor: TAN, Wei, Shenzhen, Guangdong 518129 (CN); WANG, Chunfeng, Shenzhen, Guangdong 518129 (CN); ZHANG, Xinxin, Shenzhen, Guangdong 518129 (CN); SHEN, Zhuang, Shenzhen, Guangdong 518129 (CN)
(74) Representative: Isarpatent
(86) International application number: PCT/CN2025/070144
(87) International publication number: WO 2025/260706

(57) **Abstract**

This application discloses a data sharing method, a device, a medium, and a product, and relates to the field of terminal technologies, to implement efficient data sharing between terminal devices. The method includes: A first terminal displays a first interface, where the first interface includes to-be-shared data; and sends the data to a second terminal in response to a preset condition being met. The preset condition includes one or more of the following: a distance that is between the first terminal and the second terminal and that is indicated by a broadcast signal from the second terminal is less than a preset threshold, and magnetic data of the first terminal and magnetic data of the second terminal meet a preset correlation condition.

## Description

This application claims priority to Chinese Patent Application No. 202410802035.0, filed with the China National Intellectual Property Administration on June 19, 2024, and entitled "DATA SHARING METHOD, DEVICE, MEDIUM, AND PRODUCT", which is incorporated herein by reference in its entirety.

### TECHNICAL FIELD

This application relates to the field of terminal technologies, and in particular, to a data sharing method, a device, a medium, and a product.

### BACKGROUND

With rapid development of science and technology, terminal devices have become indispensable communication tools in people's daily life and work. In addition, as a pace of people's life becomes faster, how to implement efficient data sharing between terminal devices becomes very important.

### SUMMARY

Embodiments of this application provide a data sharing method, a device, a medium, and a product, to implement efficient data sharing between terminal devices.

To achieve the foregoing objective, embodiments of this application provide the following technical solutions.

According to a first aspect, a data sharing method is provided. The method may be performed by a first terminal, or may be performed by a component of the first terminal, for example, a processor, a chip, or a chip system of the first terminal, or may be implemented by a logical module or software that can implement all or some functions of the first terminal. For example, the method may be performed by the first terminal. The method includes the following.

The first terminal displays a first interface. The first interface includes to-be-shared data. It may be understood that the first interface represents an interface currently displayed on a display of the first terminal, and may be any type of interface, for example, a picture interface, a video interface, an information interface of a wireless local area network, an information interface of an electronic red envelope, and an information interface of a contact. Correspondingly, the to-be-shared data may be a picture, a video, information about a wireless local area network, information about an electronic red envelope, information about a contact, or the like displayed in the first interface.

The first terminal determines whether a preset condition is met, and sends the data to a second terminal in response to the preset condition being met. The preset condition includes one or more of the following: a distance that is between the first terminal and the second terminal and that is indicated by a broadcast signal from the second terminal is less than a preset threshold, and magnetic data of the first terminal and magnetic data of the second terminal meet a preset correlation condition.

In other words, in some embodiments, the first terminal sends the data to the second terminal in response to the distance that is between the first terminal and the second terminal and that is indicated by the broadcast signal from the second terminal being less than the preset threshold. Alternatively, in some other embodiments, the first terminal sends the data to the second terminal in response to the magnetic data of the first terminal and the magnetic data of the second terminal meeting the preset correlation condition. Alternatively, in some other embodiments, the first terminal sends the data to the second terminal in response to the distance that is between the first terminal and the second terminal and that is indicated by the broadcast signal from the second terminal being less than the preset threshold, and the magnetic data of the first terminal and the magnetic data of the second terminal meeting the preset correlation condition.

It may be understood that, whether a location of the first terminal is close to a location of the second terminal can be determined by determining whether the distance that is between the first terminal and the second terminal and that is indicated by the broadcast signal from the second terminal is less than the preset threshold. In this way, data sharing between the first terminal and the second terminal can be implemented when the location of the first terminal is close to the location of the second terminal. Whether an orientation of the first terminal and an orientation of the second terminal are in a state of ultra-short distance can be determined by determining whether the magnetic data of the first terminal and the magnetic data of the second terminal meet the preset correlation condition. In this way, data sharing between the first terminal and the second terminal can be implemented in the state of ultra-short distance.

In the foregoing technical solution, an efficient data sharing solution between terminal devices is provided. When the first terminal displays the first interface, the first terminal can be triggered to automatically share data provided that the distance between the first terminal and the second terminal is less than the preset threshold and/or the magnetic data of the first terminal and the magnetic data of the second terminal meet the preset correlation condition. In this way, data sharing between the first terminal and the second terminal is implemented, one-touch instant sharing based on two terminals is implemented, a procedure of data sharing between the two terminals is simplified, and human-machine interaction efficiency is improved.

With reference to the first aspect, in a possible implementation, the method further includes the following.

In response to receiving the broadcast signal from the second terminal, the first terminal determines whether the distance that is between the first terminal and the second terminal and that is indicated by the broadcast signal is less than the preset threshold, and determines whether the magnetic data of the first terminal and the magnetic data of the second terminal meet the preset correlation condition.

In other words, the first terminal first determines, in response to receiving the broadcast signal from the second terminal, whether the distance that is between the first terminal and the second terminal and that is indicated by the broadcast signal is less than the preset threshold, and determines the magnetic data of the first terminal in response to the distance being less than the preset threshold. Then, whether the magnetic data of the first terminal and the magnetic data of the second terminal meet the preset correlation condition is determined, and the data is sent to the second terminal in response to the magnetic data of the first terminal and the magnetic data of the second terminal meeting the preset correlation condition.

In the foregoing implementation, a determining procedure of first determining whether the distance that is between the first terminal and the second terminal and that is indicated by the broadcast signal is less than the preset threshold, and then determining whether the magnetic data of the first terminal and the magnetic data of the second terminal meet the preset correlation condition is provided.

It should be noted that, in some other embodiments, the first terminal may alternatively first determine whether the magnetic data of the first terminal and the magnetic data of the second terminal meet the preset correlation condition, and then determine whether the distance between the first terminal and the second terminal is less than the preset threshold. In other words, in response to receiving the broadcast signal from the second terminal, the first terminal first determines the magnetic data of the first terminal, and determines whether the magnetic data of the first terminal and the magnetic data of the second terminal meet the preset correlation condition. Then, in response to the magnetic data of the first terminal and the magnetic data of the second terminal meeting the preset correlation condition, it is determined whether the distance between the first terminal and the second terminal is less than the preset threshold, and the data is sent to the second terminal in response to the distance being less than the preset threshold.

With reference to the first aspect, in a possible implementation, the broadcast signal carries the magnetic data of the second terminal.

In the foregoing implementation, the magnetic data of the second terminal is carried in the broadcast signal, so that a subsequent process of determining whether the preset condition is met is subsequently performed based on the magnetic data of the second terminal carried in the broadcast signal, thereby ensuring smooth data sharing.

With reference to the first aspect, in a possible implementation, the broadcast signal further carries device information of the second terminal.

Sending the data to the second terminal includes:
sending the data to the second terminal based on the device information of the second terminal.

In the foregoing implementation, the device information of the second terminal is carried in the broadcast signal, so that a subsequent process of performing data sharing with the second terminal is subsequently performed based on the device information of the second terminal carried in the broadcast signal, thereby ensuring smooth data sharing.

According to a second aspect, a data sharing method is provided. The method may be performed by a second terminal, or may be performed by a component of the second terminal, for example, a processor, a chip, or a chip system of the second terminal, or may be implemented by a logical module or software that can implement all or some functions of the second terminal. For example, the method may be performed by the second terminal. The method includes the following.

The second terminal obtains ambient light data. The ambient light data indicates a light condition of an ambient environment, for example, an ambient light intensity.

The second terminal determines whether the ambient light data is less than a preset light intensity, and sends a broadcast signal in response to the ambient light data being less than the preset light intensity. The broadcast signal indicates a distance between a first terminal and the second terminal.

It may be understood that, it can be determined whether a vicinity of the second terminal is blocked by determining whether the ambient light data is less than the preset light intensity, so that when the vicinity of the second terminal is blocked, a process of sending the broadcast signal can be triggered. In this way, another terminal device that may be close to the second terminal, for example, the first terminal, can detect the broadcast signal.

Further, the second terminal receives data returned by the first terminal in response to the broadcast signal.

In the foregoing technical solution, an efficient data sharing solution between terminal devices is provided. When the second terminal detects that the ambient light data is less than the preset light intensity, the second terminal may be triggered to perform a process of sending the broadcast signal, so that another terminal device that may be close to the second terminal, for example, the first terminal, can detect the broadcast signal. Further, receiving the data returned by the first terminal in response to the broadcast signal can trigger the second terminal to automatically receive the data, thereby implementing data sharing between the first terminal and the second terminal, implementing one-touch instant sharing based on two terminals, simplifying a process of data sharing between the two terminals, and improving human-machine interaction efficiency.

With reference to the second aspect, in a possible implementation, the broadcast signal carries magnetic data of the second terminal.

In the foregoing implementation, the magnetic data of the second terminal is carried in the broadcast signal, so that a subsequent process of determining whether a preset condition is met is subsequently performed based on the magnetic data of the second terminal carried in the broadcast signal, thereby ensuring smooth data sharing.

With reference to the second aspect, in a possible implementation, the broadcast signal further carries device information of the second terminal.

In the foregoing implementation, the device information of the second terminal is carried in the broadcast signal, so that a subsequent process of performing data sharing with the second terminal is subsequently performed based on the device information of the second terminal carried in the broadcast signal, thereby ensuring smooth data sharing.

With reference to the second aspect, in a possible implementation, after receiving the data returned by the first terminal in response to the broadcast signal, the method further includes:
displaying a second interface. The second interface includes the data. It may be understood that the second interface may be an interface currently displayed on a display of the second terminal, or the second interface may be a newly displayed interface on the display of the second terminal. For example, the second terminal may display the data in a floating window display manner or a pop-up window display manner in a currently displayed interface. For another example, the second terminal may display, in a full-screen display manner or a half-screen display manner, the new interface including the data.

The following describes a process of displaying the data by using an example in which the data is a picture, a video, information about a wireless local area network, information about an electronic red envelope, and information about a contact.

When the data is a picture, the picture is displayed in the second interface. In this way, picture sharing between the first terminal and the second terminal can be implemented, thereby implementing one-touch instant picture sharing based on two terminals, simplifying a procedure of picture sharing between the two terminals, and improving human-computer interaction efficiency.

When the data is a video, the video is played in the second interface. In this way, video sharing between the first terminal and the second terminal can be implemented, thereby implementing one-touch instant video sharing based on two terminals, simplifying a procedure of video sharing between the two terminals, and improving human-machine interaction efficiency.

When the data is information about a wireless local area network, the information about the wireless local area network is displayed in the second interface. In this way, network sharing between the first terminal and the second terminal can be implemented, thereby implementing one-touch instant network sharing based on two terminals, simplifying a procedure of network sharing between the two terminals, and improving human-computer interaction efficiency.

When the data is information about an electronic red envelope, the information about the electronic red envelope is displayed in the second interface. In this way, red envelope sharing between the first terminal and the second terminal can be implemented, thereby implementing one-touch instant red envelope sharing based on two terminals, simplifying a procedure of red envelope sharing between the two terminals, and improving human-machine interaction efficiency.

When the data is information about a contact, the information about the contact is displayed in the second interface. In this way, contact sharing between the first terminal and the second terminal can be implemented, thereby implementing one-touch instant contact sharing based on two terminals, simplifying a procedure of contact sharing between the two terminals, and improving human-machine interaction efficiency.

With reference to the second aspect, in a possible implementation, the method further includes:
performing preset processing based on the data. The preset processing may be a predefined processing operation, or may support a user-defined processing operation.

The following describes a process of performing preset processing by using an example in which the data is a picture, a video, information about a wireless local area network, information about an electronic red envelope, and information about a contact.

When the data is the picture, the picture is stored in a local gallery. In this way, automatic storage of the picture can be implemented, and human-computer interaction efficiency is improved.

When the data is the video, the video is stored in the local gallery. In this way, automatic storage of the video can be implemented, and human-computer interaction efficiency is improved.

When the data is the information about the wireless local area network, the wireless local area network is connected based on the information about the wireless local area network. In this way, automatic connection to the wireless local area network (for example, a wireless network or a hotspot) can be implemented, and human-computer interaction efficiency is improved.

When the data is the information about the electronic red envelope, a red envelope amount corresponding to the electronic red envelope is obtained. In this way, automatic claiming of the electronic red envelope can be implemented, and human-computer interaction efficiency is improved.

When the data is the information about the contact, the information about the contact is added to a contact information base. In this way, the contact can be automatically added, and human-computer interaction efficiency is improved.

According to a third aspect, a data sharing apparatus is provided, configured to implement any method provided in the first aspect. The data sharing apparatus includes a corresponding module, unit, or means (means) for implementing the foregoing method. An action performed by the module, unit, or means may be implemented by using hardware, software, or hardware executing corresponding software. The hardware or the software includes one or more modules or units corresponding to the foregoing function.

In a possible implementation, the apparatus may include a display module and a sending module.

The display module is configured to display a first interface, where the first interface includes to-be-shared data.

The sending module is configured to send the data to a second terminal in response to a preset condition being met.

The preset condition includes one or more of the following: a distance that is between a first terminal and the second terminal and that is indicated by a broadcast signal from the second terminal is less than a preset threshold, and magnetic data of the first terminal and magnetic data of the second terminal meet a preset correlation condition.

According to a fourth aspect, a data sharing apparatus is provided, configured to implement any method provided in the second aspect. The data sharing apparatus includes a corresponding module, unit, or means for implementing the foregoing method. An action performed by the module, unit, or means may be implemented by using hardware, software, or hardware executing corresponding software. The hardware or the software includes one or more modules or units corresponding to the foregoing function.

In a possible implementation, the apparatus may include an obtaining module, a sending module, and a receiving module.

The obtaining module is configured to obtain ambient light data.

The sending module is configured to send a broadcast signal in response to the ambient light data being less than a preset light intensity, where the broadcast signal indicates a distance between the first terminal and the second terminal.

The receiving module is configured to receive data returned by the first terminal in response to the broadcast signal.

According to a fifth aspect, a data sharing system is provided, including a first terminal and a second terminal.

The second terminal obtains ambient light data.

The second terminal sends a broadcast signal in response to the ambient light data being less than a preset light intensity, where the broadcast signal indicates a distance between the first terminal and the second terminal.

The first terminal displays a first interface, where the first interface includes to-be-shared data.

The first terminal sends the data to the second terminal in response to the distance that is between the first terminal and the second terminal and that is indicated by the broadcast signal from the second terminal being less than a preset threshold, and magnetic data of the first terminal and magnetic data of the second terminal meeting a preset correlation condition.

The second terminal receives the data returned by the first terminal in response to the broadcast signal.

According to a sixth aspect, a terminal device is provided, including a memory and a processor. The memory is connected to the processor. The memory is configured to store computer-executable instructions. The processor is configured to invoke the computer-executable instructions, to perform the method according to any one of the first aspect, the second aspect, or the implementations of the first aspect and the second aspect.

The terminal device in the sixth aspect may be the terminal device in any implementation of the first aspect or the second aspect, an apparatus including the terminal device, or an apparatus included in the terminal device, for example, a chip.

According to a seventh aspect, a chip is provided. The chip includes a processor and an interface circuit. The interface circuit is configured to receive computer-executable instructions and transmit the computer-executable instructions to the processor. The processor is configured to run the computer-executable instructions to perform the method according to any one of the first aspect, the second aspect, or the implementations of the first aspect and the second aspect.

According to an eighth aspect, a computer-readable storage medium is provided, including computer-executable instructions. When the computer-executable instructions are run on a terminal device, the terminal device is enabled to perform the method in any one of the first aspect, the second aspect, or the implementations of the first aspect.

According to a ninth aspect, a computer program product is provided, including computer-executable instructions. When the computer-executable instructions are run on a terminal device, the terminal device is enabled to perform the method in any one of the first aspect, the second aspect, or the implementations of the first aspect.

It should be noted that for technical effect brought by any implementation of the third aspect to the ninth aspect, refer to technical effect brought by a corresponding implementation in the first aspect or the second aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a diagram of a scenario of a data sharing method according to a related technology;
FIG. 2 is a diagram of a system architecture of a data sharing method according to an embodiment of this application;
FIG. 3 is a diagram of a hardware structure of a terminal device according to an embodiment of this application;
FIG. 4 is a schematic flowchart of a data sharing method according to an embodiment of this application;
FIG. 5A and FIG. 5B are a schematic flowchart of another data sharing method according to an embodiment of this application;
FIG. 6 is a diagram of a picture sharing scenario according to an embodiment of this application;
FIG. 7 is a diagram of a wallpaper sharing scenario according to an embodiment of this application;
FIG. 8 is a diagram of a video sharing scenario according to an embodiment of this application;
FIG. 9 is a diagram of a network sharing scenario according to an embodiment of this application;
FIG. 10 is a diagram of a red envelope sharing scenario according to an embodiment of this application;
FIG. 11 is a diagram of a contact sharing scenario according to an embodiment of this application;
FIG. 12A to FIG. 12D are a schematic flowchart of data sharing according to an embodiment of this application;
FIG. 13 is a diagram of a structure of a data sharing apparatus according to an embodiment of this application; and
FIG. 14 is a diagram of a structure of another data sharing apparatus according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, an apparatus provided in embodiments of this application may also correspondingly implement these features or functions. Details are not described herein.

In this application, unless otherwise specified, for same or similar parts of embodiments, mutual reference may be made between the embodiments. In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. The following implementations of this application are not intended to limit the protection scope of this application.

To facilitate understanding of the technical solutions in embodiments of this application, the following briefly describes related terms in embodiments of this application.
(1) Instant sharing (Moment Share) means that a user can instantly and synchronously share data with another user. In some embodiments, instant sharing may be implemented through various sharing functions provided by a manufacturer of a terminal device, for example, AirDrop (AirDrop) of Apple and Huawei Share (Huawei Share) of Huawei. Huawei Share is a technology for sharing data between terminal devices in a wireless manner, for example, quickly sharing data such as a picture, a video, and a document.
   It may be understood that instant sharing is merely a word used in embodiments of this application, a meaning represented by the word is recorded in embodiments of this application, and a name of the word does not constitute any limitation on embodiments of this application. In addition, in some other embodiments of this application, instant sharing may also be referred to as another term, for example, "short-range sharing" or "short-distance sharing". In embodiments of this application, the solution is subsequently described by using Huawei Share as an example.
(2) Near field communication (near field communication, NFC) can provide a short-range wireless connection, to implement short-range communication between terminal devices.
(3) A mobile sensing development platform (mobile sensing development platform, MSDP) provides a distributed fusion sensing capability, and is configured to summarize and fuse a plurality of sensing sources of a terminal device, so as to accurately sense a space status, a mobility status, a health status, and the like of the terminal device. The sensing source may be a sensor (Sensor), for example, an ambient light sensor or a magnetometer sensor.
   It should be noted that the mobile sensing development platform provides a service of subscribing to a sensing function of the terminal device. For example, a user may subscribe to an ambient light sensing function, a magnetic sensing function, and the like of the terminal device via the mobile sensing development platform. After the subscription succeeds, the mobile sensing development platform can return a status of the terminal device to a subscriber after identifying the status of the terminal device, that is, return the status to the terminal device.
(4) A soft bus is a bus technology implemented based on software, and can implement data transmission and device communication according to a software protocol.

The following describes an example of an application scenario in embodiments of this application.

With rapid development of science and technology, terminal devices have become indispensable communication tools in people's daily life and work. In addition, as a pace of people's life becomes faster, how to implement efficient data sharing between terminal devices becomes very important.

In a related technology 1, terminal devices may implement data sharing between the terminal devices based on a Huawei Share function. For example, a sharing terminal and a receiving terminal are used as an example. A data sharing service procedure based on the Huawei Share function may include: A user performs an operation in the sharing terminal, to trigger the sharing terminal to display to-be-shared data in an interface. The user performs an operation on a sharing entry in the interface, to trigger the sharing terminal to display, in the interface, a pop-up window including a sharing control (for example, a Huawei Share control). The user performs an operation on the sharing control in the pop-up window, to trigger the sharing terminal to display a sharing interface (for example, a Huawei Share interface). The sharing interface includes a plurality of candidate terminals, such as a terminal 1 and a terminal 2. The user performs an operation on the receiving terminal in the sharing interface, to trigger the sharing terminal to send a sharing request to the receiving terminal, where the sharing request carries the to-be-shared data. Correspondingly, after receiving the sharing request, the receiving terminal displays a sharing request pop-up window including a receiving control and a reject control. The user performs an operation on the receiving control in the sharing request pop-up window, to receive the data from the sharing terminal, thereby completing data sharing between the terminal devices.

However, in the foregoing data sharing service procedure based on the Huawei Share function, both devices need to perform a plurality of operations. Consequently, the procedure is complex, and human-computer interaction efficiency is low.

In a related technology 2, terminal devices may implement data sharing between the terminal devices based on an NFC function. A sharing terminal and a receiving terminal are used as an example. When an NFC tag is deployed on each of the sharing terminal and the receiving terminal, data sharing between the sharing terminal and the receiving terminal, for example, initiating picture sharing, screen projection, or collaboration, can be implemented by placing the sharing terminal close to the receiving terminal.

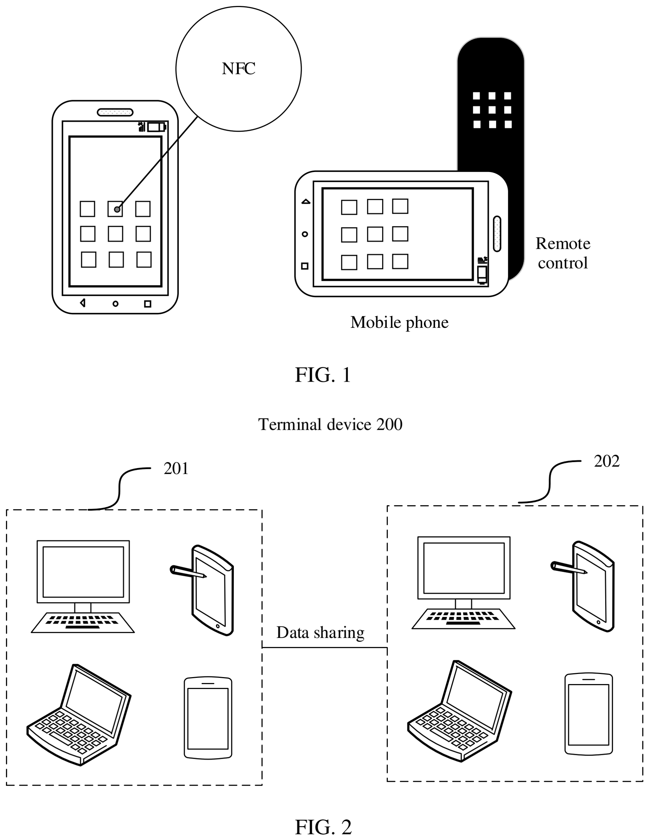

For example, FIG. 1 is a diagram of a scenario of a data sharing method according to a related technology. Refer to FIG. 1. An example in which the sharing terminal is a mobile phone and the receiving terminal is a remote control is used. An NFC area of the mobile phone is placed close to an NFC area of the remote control, so that data sharing between the mobile phone and the remote control can be implemented.

However, in the foregoing data sharing solution based on the NFC function, sensing functions of the terminal devices need to depend on the NFC tags, and the NFC tags need to be additionally deployed in the terminal devices and tag information needs to be preset for normal use. This imposes a constraint on hardware of the terminal device.

In view of this, embodiments of this application provide a data sharing method, to provide an efficient data sharing solution between terminal devices. When a second terminal detects that ambient light data is less than a preset light intensity, the second terminal may be triggered to perform a process of sending a broadcast signal, so that another terminal device that may be close to the second terminal, for example, a first terminal, can detect the broadcast signal. Further, the first terminal can be triggered to automatically share data provided that a distance between the first terminal and the second terminal is less than a preset threshold and/or magnetic data of the first terminal and magnetic data of the second terminal meet a preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

It may be found that, according to the data sharing method provided in embodiments of this application, a user does not need to perform a plurality of interaction operations such as tapping a sharing control, selecting a receiving terminal, or tapping a receiving control. This simplifies a data sharing procedure between two terminals, and improves human-computer interaction efficiency. In addition, ultra-near-range sensing between terminal devices can be implemented without relying on NFC tags, to implement seamless data sharing across the terminal devices, thereby implementing one-touch direct sharing service experience based on ultra-near-range sensing.

For ease of understanding of embodiments of this application, the following descriptions are provided before embodiments of this application are described.
1. In embodiments of this application, "indication" may include a direct indication and an indirect indication, or may include an explicit indication and an implicit indication. Information indicated by a piece of information is referred to as to-be-indicated information. In a specific implementation process, the to-be-indicated information may be indicated in a plurality of manners, for example, but not limited to being directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device. The configuration information may include, for example, but is not limited to, radio resource control signaling, for example, one or a combination of at least two of radio resource control (Radio Resource Control, RRC) signaling, media access control (Media Access Control, MAC) layer signaling, physical layer signaling, sidelink control information (Sidelink Control Information, SCI), or downlink control information (Downlink Control Information, DCI).

2. "Predefinition" or "preconfiguration" may be implemented by pre-storing, in a device (for example, a terminal device), corresponding code, a table, or another manner that may indicate related information. A specific implementation is not limited in embodiments of this application. "Storage" may mean storage in one or more memories. The one or more memories may be separately disposed, or may be integrated in an encoder or a decoder, a processor, or a data sharing apparatus. Alternatively, some of the one or more memories may be separately disposed, and some of the memories may be integrated into a decoder, a processor, or a data sharing apparatus. A type of the memory may be a storage medium in any form. This is not limited in embodiments of this application.

3. In embodiments of this application, descriptions such as "when...", "in a case of...", and "if" all mean that a device (for example, a terminal device) performs corresponding processing in an objective case, and are not limited to time, and the device (for example, the terminal device) is not required to perform a determining action during implementation. This does not mean that there is another limitation.

In addition, the system architecture and the service scenario described in embodiments of this application are intended to describe the technical solutions in embodiments of this application more clearly, but do not constitute a limitation on the technical solutions provided in embodiments of this application. A person of ordinary skill in the art may know that, with evolution of the system architecture and emergence of a new service scenario, the technical solutions provided in embodiments of this application are also applicable to similar technical problems.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

The following describes an example of a system architecture in embodiments of this application.

In some embodiments, the data sharing method provided in embodiments of this application may be applied to a system architecture shown in FIG. 2. For example, FIG. 2 is a diagram of a system architecture of a data sharing method according to an embodiment of this application. Refer to FIG. 2. The system architecture may include a terminal device 200.

In some embodiments, the terminal device 200 may be at least one of devices such as a smartphone, a smartwatch, a printer, a desktop computer, a laptop computer, a virtual reality terminal, an augmented reality terminal, a wireless terminal, and a laptop portable computer.

In this embodiment of this application, the terminal device 200 may include a first terminal 201 and a second terminal 202.

The first terminal 201 represents a terminal device that is to share data, for example, may be referred to as a sharing terminal. In this embodiment of this application, the first terminal 201 is configured to perform a process of sharing data with the second terminal 202 in this embodiment of this application, to implement data sharing between the first terminal 201 and the second terminal 202.

The second terminal 202 represents a terminal device that is to receive data, for example, may be referred to as a receiving terminal. In this embodiment of this application, the second terminal 202 is configured to perform a process of receiving data from the first terminal 201 in this embodiment of this application, to implement data sharing between the first terminal 201 and the second terminal 202.

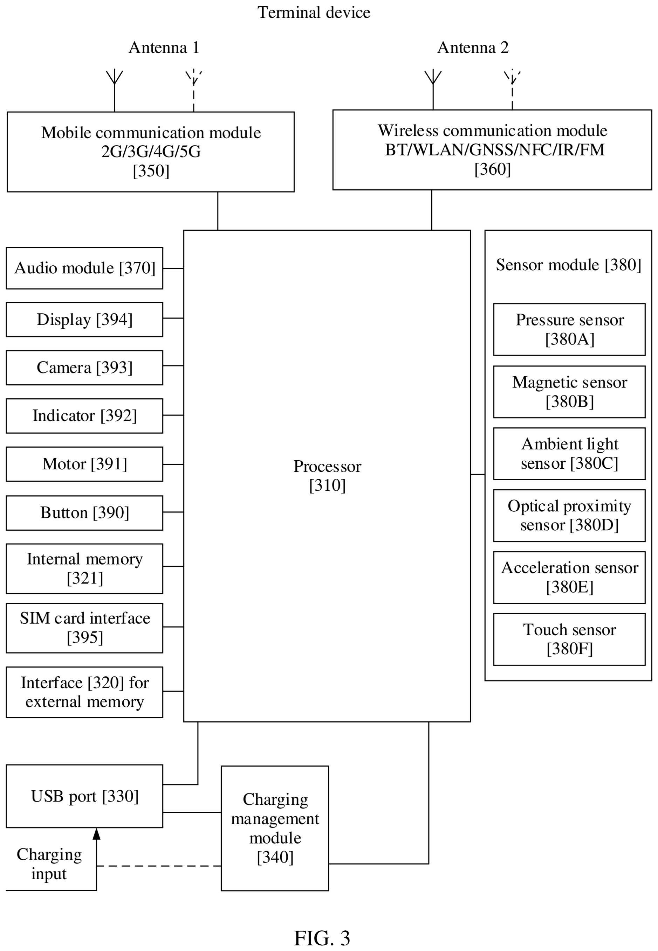

In an example of this application, a diagram of a hardware structure of the terminal device is shown in FIG. 3. FIG. 3 is a diagram of a hardware structure of a terminal device according to an embodiment of this application.

Refer to FIG. 3. The terminal device may include a processor 310, an interface 320 for external memory, an internal memory 321, a universal serial bus (universal serial bus, USB) interface 330, a charging management module 340, an antenna 1, an antenna 2, a mobile communication module 350, a wireless communication module 360, an audio module 370, a sensor module 380, a button 390, a motor 391, an indicator 392, a camera 393, a display 394, a subscriber identification module (subscriber identification module, SIM) card interface 395, and the like. The sensor module 380 may include a pressure sensor 380A, a magnetic sensor 380B, an ambient light sensor 380C, an optical proximity sensor 380D, an acceleration sensor 380E, a touch sensor 380F, and the like.

It can be understood that, a structure illustrated in embodiments of this application does not constitute a specific limitation on the terminal device. In some other embodiments of this application, the terminal device may include more or fewer components than those shown in the figure, or some components may be combined, some components may be split, or different component arrangements may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device. The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache memory. The memory may store instructions or data just used or cyclically used by the processor 310. If the processor 310 needs to use the instructions or the data again, the processor 310 may directly invoke the instructions or the data from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be separately coupled to the touch sensor 380F, a charger, a flash, the camera 393, and the like through different I2C bus interfaces. For example, the processor 310 may be coupled to the touch sensor 380F through the I2C interface, so that the processor 310 communicates with the touch sensor 380F through the I2C bus interface, to implement a touch function of the terminal device.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communication module 360 through the I2S interface, to implement a function of answering a call via a Bluetooth headset.

The PCM interface may also be used to perform audio communication, and sample, quantize, and code an analog signal. In some embodiments, the audio module 370 may be coupled to the wireless communication module 360 through the PCM bus interface. In some embodiments, the audio module 370 may alternatively transmit an audio signal to the wireless communication module 360 through the PCM interface, to implement a function of answering a call via a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 310 and the wireless communication module 360. For example, the processor 310 communicates with a Bluetooth module in the wireless communication module 360 through the UART interface, to implement a Bluetooth function. In some embodiments, the audio module 370 may transmit an audio signal to the wireless communication module 360 through the UART interface, to implement a function of playing music via a Bluetooth headset.

The MIPI interface may be configured to connect the processor 310 to a peripheral device, for example, the display 394 or the camera 393. The MIPI interface includes a camera serial interface (camera serial interface, CSI), a display serial interface (display serial interface, DSI), and the like. In some embodiments, the processor 310 communicates with the camera 393 through the CSI interface, to implement a photographing function of the terminal device. The processor 310 communicates with the display 394 through the DSI interface, to implement a display function of the terminal device.

The GPIO interface may be configured by software. The GPIO interface may be configured as a control signal or a data signal. In some embodiments, the GPIO interface may be configured to connect the processor 310 to the camera 393, the display 394, the wireless communication module 360, the audio module 370, the sensor module 380, and the like. The GPIO interface may be further configured as the I2C interface, the I2S interface, the UART interface, the MIPI interface, or the like.

The USB port 330 is an interface that conforms to a USB standard specification, and may be specifically a mini USB port, a micro USB port, a USB type-C port, or the like. The USB port 330 may be configured to connect to a charger to charge the terminal device, or may be used to transmit data between the terminal device and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the terminal device. In some other embodiments of this application, the terminal device may alternatively use an interface connection manner different from that in the foregoing embodiments or a combination of a plurality of interface connection manners.

The charging management module 340 is configured to receive a charging input from a charger. The charger may be a wireless charger or a wired charger. In some embodiments of wired charging, the charging management module 340 may receive a charging input of the wired charger through the USB port 330. In some embodiments of wireless charging, the charging management module 340 may receive a wireless charging input through a wireless charging coil of the terminal device.

A wireless communication function of the terminal device may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 350 may provide a wireless communication solution that includes 2G/3G/4G/5G or the like and that is applied to the terminal device. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to a speaker, a receiver, or the like), or displays an image or a video via the display 394. In some embodiments, the modem processor may be an independent component. In some other embodiments, the modem processor may be independent of the processor 310, and is disposed in a same component as the mobile communication module 350 or another functional module.

The wireless communication module 360 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the to-be-sent signal, and convert a processed signal into an electromagnetic wave for radiation via the antenna 2.

In some embodiments, the antenna 1 and the mobile communication module 350 in the terminal device are coupled, and the antenna 2 and the wireless communication module 360 in the terminal device are coupled, so that the terminal device can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The terminal device implements a display function via the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the terminal device may include one or N displays 394, where N is a positive integer greater than 1.

The terminal device may implement a photographing function via the ISP, the camera 393, the video codec, the GPU, the display 394, the application processor and the like.

The ISP is configured to process data fed back by the camera 393. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device may include one or N cameras 393, where N is a positive integer greater than 1.

The digital signal processor is configured to process a digital signal, and may process another digital signal in addition to the digital image signal. For example, when the terminal device selects a frequency, the digital signal processor is configured to perform Fourier transform and the like on frequency energy.

The video codec is configured to compress or decompress a digital video. The terminal device may support one or more video codecs. In this way, the terminal device may play or record videos in a plurality of encoding formats, for example, moving picture experts group (moving picture experts group, MPEG) 1, MPEG2, MPEG3 and MPEG4.

The NPU is a neural-network (neural-network, NN) computing processor, quickly processes input information by referring to a structure of a biological neural network, for example, by referring to a mode of transmission between human brain neurons, and may further continuously perform self-learning. The NPU may be used to implement applications such as intelligent cognition of the terminal device, for example, image recognition, facial recognition, voice recognition, and text understanding.

The interface 320 for external memory may be used to connect to an external memory card, for example, a micro SD card, to extend a storage capability of the terminal device. The external memory card communicates with the processor 310 through the interface 320 for external memory, to implement a data storage function. For example, files such as music and a video are stored in the external storage card.

The internal memory 321 may be configured to store computer-executable program code, where the executable program code includes instructions. The processor 310 runs the instructions stored in the internal memory 321, to perform various function applications and data processing of the terminal device. The internal memory 321 may include a program storage area and a data storage area. The program storage area may store an operating system, an application required by at least one function (such as a sound playing function or an image playing function), and the like. The data storage area may store data (such as audio data and a phone book) created in a process of using the terminal device. In addition, the internal memory 321 may include a high-speed random access memory, and may further include a nonvolatile memory, for example, at least one magnetic disk storage component, a flash memory component, and a universal flash storage (universal flash storage, UFS).

The audio module 370 is configured to convert digital audio information into an analog audio signal for output, and is further configured to convert an analog audio input into a digital audio signal. The audio module 370 may be further configured to encode and decode an audio signal. In some embodiments, the audio module 370 may be disposed in the processor 310, or some functional modules of the audio module 370 are disposed in the processor 310.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When force is applied to the pressure sensor 380A, capacitance between electrodes changes. The terminal device determines pressure strength based on a capacitance change. When a touch operation is performed on the display 394, the terminal device detects intensity of the touch operation based on the pressure sensor 380A. The terminal device may also calculate a touch location based on a detection signal of the pressure sensor 380A. In some embodiments, touch operations that are performed in a same touch position but have different touch operation intensity may correspond to different operation instructions. For example, when a touch operation whose touch operation intensity is less than a first pressure threshold is performed on a messages application icon, an instruction for viewing a message is performed. When a touch operation whose touch operation intensity is greater than or equal to the first pressure threshold is performed on the messages application icon, an instruction for creating a new message is performed.

The magnetic sensor 380B includes a Hall effect sensor. The terminal device may detect opening and closing of a flip case via the magnetic sensor 380B. In some embodiments, when the terminal device is a flip phone, the terminal device may detect opening and closing of a flip cover based on the magnetic sensor 380B. Further, a feature such as automatic unlocking of the flip cover is set based on a detected opening or closing state of the leather case or a detected opening or closing state of the flip cover. In this embodiment of this application, the magnetic sensor 380B may be a magnetometer sensor, and is configured to detect magnetic data of the terminal device.

The ambient light sensor 380C is configured to sense ambient light brightness. The terminal device may adaptively adjust brightness of the display 394 based on the sensed ambient light brightness. The ambient light sensor 380C may also be configured to automatically adjust white balance during photographing. The ambient light sensor 380C may further cooperate with the optical proximity sensor 380D to detect whether the terminal device is in a pocket, to prevent an accidental touch. In embodiments of this application, the ambient light sensor 380C is configured to detect ambient light data of the terminal device, to determine whether the terminal device is blocked.

The optical proximity sensor 380D may include, for example, a light-emitting diode (LED) and an optical detector, for example, a photodiode. The light-emitting diode may be an infrared light-emitting diode. The terminal device emits infrared light outwards via the light-emitting diode. The terminal device detects infrared reflected light from a nearby object via the photodiode. When sufficient reflected light is detected, the terminal device may determine that there is an object near the terminal device. When insufficient reflected light is detected, the terminal device may determine that there is no object near the terminal device. The terminal device may detect, via the optical proximity sensor 380D, that a user holds the terminal device close to an ear for a call, so that the terminal device automatically turns off the screen to save power. The optical proximity sensor 380D may also be used in a smart cover mode or a pocket mode to automatically perform screen unlocking or locking.

The acceleration sensor 380E may detect values of accelerations of the terminal device in various directions (usually on three axes). When the terminal device is still, the acceleration sensor 380E may detect a gravity size and a gravity direction. The acceleration sensor 380E may be further configured to identify a posture of the electronic device, and is used in an application such as switching between a landscape mode and a portrait mode or a pedometer.

The touch sensor 380F is also referred to as a "touch panel". The touch sensor 380F may be disposed on the display 394, and the touch sensor 380F and the display 394 form a touchscreen, which is also referred to as a "touch screen". The touch sensor 380F is configured to detect a touch operation performed on or near the touch sensor 380F. The touch sensor may transfer the detected touch operation to the application processor to determine a type of a touch event. The display 394 may provide a visual output related to the touch operation. In some other embodiments, the touch sensor 380F may alternatively be disposed on a surface of the terminal device at a location different from that of the display 394.

The button 390 includes a power button, a volume button, and the like. The button 390 may be a mechanical button, or may be a touch button. The terminal device may receive a button input, and generate a button signal input related to a user setting and function control of the terminal device.

The motor 391 may generate a vibration prompt. The motor 391 may be configured to provide an incoming call vibration prompt and touch vibration feedback. For example, touch operations performed on different applications (for example, photo taking and audio playing) may be corresponding to different vibration feedback effect. For touch operations performed on different areas of the display 394, the motor 391 may also correspond to different vibration feedback effect. Different application scenarios (for example, a time reminder, information receiving, an alarm clock, and a game) may also be corresponding to different vibration feedback effect. Touch vibration feedback effect may be further customized.

The indicator 392 may be an indicator light, and may be configured to indicate a charging status and a power change, or may be configured to indicate a message, a missed call, a notification, or the like.

The SIM card interface 395 is configured to connect to a SIM card. The SIM card may be inserted into the SIM card interface 395 or detached from the SIM card interface 395, to implement contact with or separation from the terminal device. The terminal device may support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The terminal device interacts with a network via the SIM card, to implement functions such as a call and data communication. In some embodiments, the terminal device uses an eSIM, that is, an embedded SIM card. The eSIM card may be embedded in the terminal device, and cannot be separated from the terminal device.

It should be noted that the structure shown in FIG. 3 does not constitute a limitation on the terminal device. In addition to the components shown in FIG. 3, the terminal device may further include more or fewer components than those shown in the figure, or a combination of a part of the components, or an arrangement of different components.

For ease of understanding, the following describes, by using an example with reference to the foregoing system architecture and the accompanying drawings, the data sharing method provided in embodiments of this application. It should be noted that, in the following embodiments of this application, a name of each parameter, a name of each piece of information, or the like is merely an example, and may have another name in another embodiment. The data sharing method provided in this application is not specifically limited thereto.

It may be understood that in embodiments of this application, a terminal device may perform some or all of the steps in embodiments of this application, and these steps or operations are merely examples. In embodiments of this application, another operation or various operation variants may further be performed. In addition, the steps may be performed in a sequence different from a sequence presented in embodiments of this application, and not all operations in embodiments of this application need to be performed.

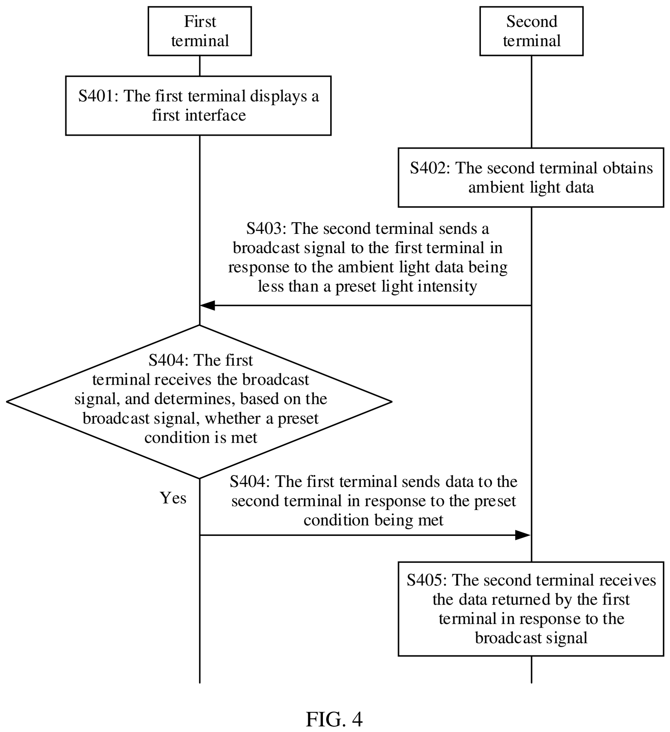

FIG. 4 is a schematic flowchart of a data sharing method according to an embodiment of this application. In some possible implementations, the data sharing method may be completed by the first terminal and the second terminal shown in FIG. 2 in cooperation. Refer to FIG. 4, the method includes the following S401 to S405.

S401: The first terminal displays a first interface.

The first interface includes to-be-shared data. In some embodiments, the first interface may be any type of interface, for example, a picture interface, a video interface, an information interface of a wireless local area network, an information interface of an electronic red envelope, and an information interface of a contact. Correspondingly, the to-be-shared data may be a picture, a video, information about a wireless local area network, information about an electronic red envelope, information about a contact, or the like displayed in the first interface.

S402: The second terminal obtains ambient light data.

The ambient light data indicates a light condition of an ambient environment, for example, an ambient light intensity (that is, ambient light brightness).

S403: The second terminal sends a broadcast signal in response to the ambient light data being less than a preset light intensity.

The preset light intensity refers to a preset light intensity threshold, for example, a light intensity threshold less than 0.5.

S404: The first terminal receives the broadcast signal, determines, based on the broadcast signal, whether a preset condition is met, and sends the data to the second terminal in response to the preset condition being met.

The preset condition includes one or more of the following: a distance that is between the first terminal and the second terminal and that is indicated by the broadcast signal from the second terminal is less than a preset threshold, and magnetic data of the first terminal and magnetic data of the second terminal meet a preset correlation condition.

S405: The second terminal receives the data returned by the first terminal in response to the broadcast signal.

The technical solutions provided in embodiments of this application provide an efficient data sharing solution between terminal devices. When the second terminal detects that the ambient light data is less than the preset light intensity, the second terminal may be triggered to perform a process of sending the broadcast signal, so that another terminal device that may be close to the second terminal, for example, the first terminal, can detect the broadcast signal. Further, the first terminal can be triggered to automatically share data provided that the distance between the first terminal and the second terminal is less than the preset threshold and/or the magnetic data of the first terminal and the magnetic data of the second terminal meet the preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

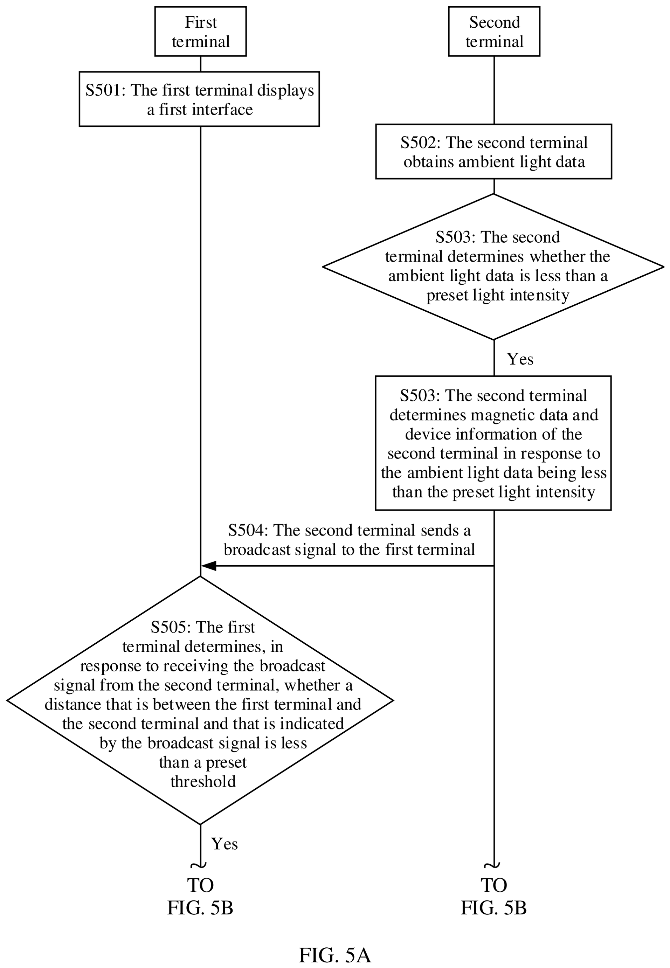

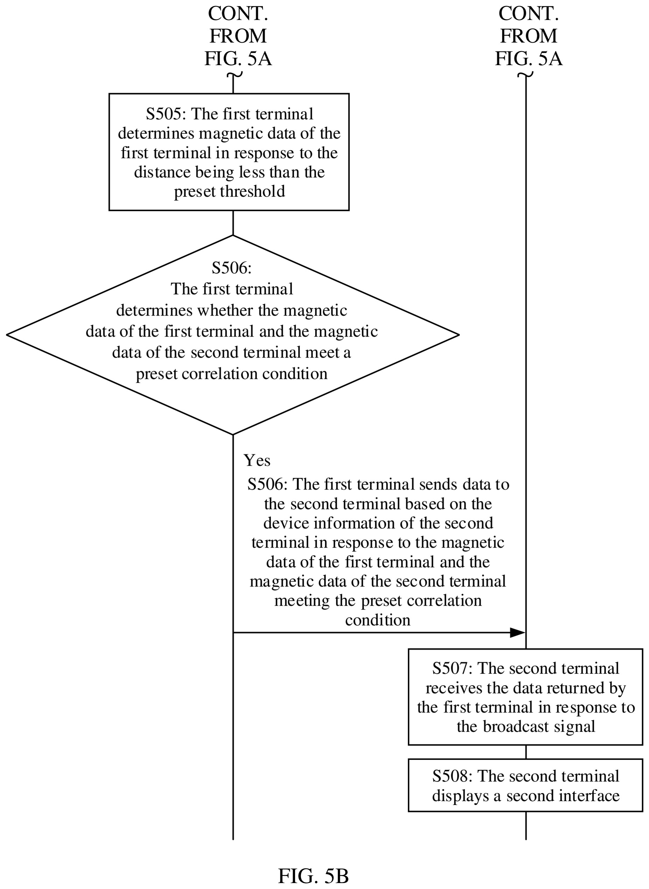

FIG. 5A and FIG. 5B are a schematic flowchart of another data sharing method according to an embodiment of this application. In FIG. 5A and FIG. 5B, an interaction procedure between a first terminal and a second terminal is used as an example to describe a data sharing process between the first terminal and the second terminal. Refer to FIG. 5A and FIG. 5B. The method includes the following S501 to S508.

S501: The first terminal displays a first interface.

The first interface includes to-be-shared data. In some embodiments, the first interface may be a picture interface, and the to-be-shared data may be a picture. In some other embodiments, the first interface may be a video interface, and the to-be-shared data may be a video. In some other embodiments, the first interface may be an information interface of a wireless local area network, and the to-be-shared data may be information about a wireless local area network. In some other embodiments, the first interface may be an information interface of an electronic red envelope, and the to-be-shared data may be information about an electronic red envelope. In some other embodiments, the first interface may be an information interface of a contact, and the to-be-shared data may be information about a contact.

It should be noted that, in some other embodiments, the first interface may alternatively be another type of interface, for example, a document interface. The first interface is not limited in embodiments of this application. Correspondingly, the data may alternatively be another type of data, for example, a file. The data is not limited in embodiments of this application.

S502: The second terminal obtains ambient light data.

The ambient light data indicates a light condition of an ambient environment, for example, an ambient light intensity (that is, ambient light brightness).

In some embodiments, the second terminal may obtain the ambient light data via an ambient light sensor. It should be noted that, in some other embodiments, the second terminal may alternatively obtain the ambient light data in another manner. This is not limited in embodiments of this application.

S503: The second terminal determines whether the ambient light data is less than a preset light intensity, and determines magnetic data and device information of the second terminal in response to the ambient light data being less than the preset light intensity.

The preset light intensity refers to a preset light intensity threshold, for example, a light intensity threshold less than 0.5. Setting of the preset light intensity is not limited in embodiments of this application. It should be understood that, if the ambient light data is less than the preset light intensity, it indicates that a vicinity of the second terminal is blocked. In this case, there may be another terminal that is close to the second terminal. For example, in this embodiment of this application, the first terminal is used to represent the another terminal that is close to the second terminal. If the ambient light data is greater than or equal to the preset light intensity, it indicates that the vicinity of the second terminal is not blocked.

The magnetic data of the second terminal indicates a magnetic field status of the second terminal, for example, magnetic field strength and a magnetic field direction. It may be understood that an orientation of the second terminal can be determined based on the magnetic data of the second terminal. In some embodiments, the second terminal may obtain the magnetic data of the second terminal via a magnetometer sensor. It should be noted that, in some other embodiments, the second terminal may alternatively obtain the magnetic data in another manner. This is not limited in embodiments of this application.

The device information may include a media access control address (media access control address, MAC), a hypertext markup language (hypertext markup language, HML), and the like. In some embodiments, the second terminal may prestore the device information of the second terminal.

In this embodiment of this application, an example in which the ambient light data is less than the preset light intensity is used to describe the solution. In some other embodiments, when the ambient light data is greater than or equal to the preset light intensity, it means that the vicinity of the second terminal is not blocked, and a data sharing process in subsequent S504 to S508 does not need to be performed.

S504: The second terminal sends a broadcast signal.

The broadcast signal may carry the magnetic data of the second terminal. In this way, the magnetic data of the second terminal is carried in the broadcast signal, so that a subsequent process of determining whether a preset condition is met is subsequently performed based on the magnetic data of the second terminal carried in the broadcast signal, thereby ensuring smooth data sharing. Further, the broadcast signal further carries the device information of the second terminal. In this way, the device information of the second terminal is carried in the broadcast signal, so that a subsequent process of performing data sharing with the second terminal is subsequently performed based on the device information of the second terminal carried in the broadcast signal, thereby ensuring smooth data sharing. In this embodiment of this application, an example in which the broadcast signal carries both the magnetic data of the second terminal and the device information of the second terminal is used to describe the solution.

For example, the broadcast signal may be a Bluetooth low energy (Bluetooth low energy, BLE) broadcast signal. In this way, the magnetic data and the device information of the second device may be sent to a surrounding terminal device in a broadcast manner. In this case, the first terminal can detect the broadcast signal.

S503 and S504 correspond to content that the second terminal sends the broadcast signal in response to the ambient light data being less than the preset light intensity in S403 shown in FIG. 4.

S505: The first terminal determines, in response to receiving the broadcast signal from the second terminal, whether a distance that is between the first terminal and the second terminal and that is indicated by the broadcast signal is less than a preset threshold, and determines magnetic data of the first terminal in response to the distance being less than the preset threshold.

The preset threshold is a preset distance threshold, for example, a distance threshold less than 0.5 mm. Setting of the preset threshold is not limited in embodiments of this application. It should be understood that, if the distance between the first terminal and the second terminal is less than the preset threshold, it indicates that a location of the first terminal is close to a location of the second terminal. If the distance between the first terminal and the second terminal is greater than or equal to the preset threshold, it indicates that the location of the first terminal is not close to the location of the second terminal.

In some embodiments, in response to receiving the broadcast signal from the second terminal, the first terminal determines the distance between the first terminal and the second terminal based on the broadcast signal. A process of determining the distance between the first terminal and the second terminal based on the broadcast signal may be: determining, based on signal strength of the broadcast signal, a transmission distance corresponding to the signal strength as the distance between the first terminal and the second terminal. For example, the first terminal may prestore transmission distances corresponding to different signal strength. It should be noted that, in some other embodiments, the first terminal may alternatively determine the distance between the first terminal and the second terminal in another manner. This is not limited in embodiments of this application.

The magnetic data of the first terminal indicates a magnetic field status of the first terminal, for example, magnetic field strength and a magnetic field direction. It may be understood that an orientation of the first terminal can be determined based on the magnetic data of the first terminal. In some embodiments, the first terminal may obtain the magnetic data of the first terminal via a magnetometer sensor. It should be noted that, in some other embodiments, the first terminal may alternatively obtain the magnetic data in another manner. This is not limited in embodiments of this application.

In this embodiment of this application, an example in which the distance between the first terminal and the second terminal is less than the preset threshold is used to describe the solution. In some other embodiments, when the distance between the first terminal and the second terminal is greater than or equal to the preset threshold, it means that the location of the first terminal is not close to the location of the second terminal, and the data sharing process in subsequent S506 to S508 does not need to be performed.

S506: The first terminal determines whether the magnetic data of the first terminal and the magnetic data of the second terminal meet a preset correlation condition, and sends the data to the second terminal based on the device information of the second terminal in response to the magnetic data of the first terminal and the magnetic data of the second terminal meeting the preset correlation condition.

The preset correlation condition is a preset correlation condition. For example, the magnetic data of the first terminal is the same as the magnetic data of the second terminal, or a similarity between the magnetic data of the first terminal and the magnetic data of the second terminal is greater than or equal to a preset similarity. Setting of the preset correlation condition is not limited in embodiments of this application.

It should be understood that, if the magnetic data of the first terminal and the magnetic data of the second terminal meet the preset correlation condition, it indicates that the first terminal and the second terminal are in a state of ultra-short distance. In this case, a condition for ultra-short distance transmission can be met. Therefore, the first terminal can directly send the data to the second terminal. If the magnetic data of the first terminal and the magnetic data of the second terminal do not meet the preset correlation condition, it indicates that the first terminal and the second terminal are not in the state of ultra-short distance. In this case, the condition for ultra-short distance transmission cannot be met. Therefore, the first terminal cannot send the data to the second terminal.

In the embodiment shown in S505 and S506, the solution is described by using an example in which the first terminal first determines whether the distance between the first terminal and the second terminal is less than the preset threshold, and then determines whether the magnetic data of the first terminal and the magnetic data of the second terminal meet the preset correlation condition. In some other embodiments, the first terminal may alternatively determine only whether the distance between the first terminal and the second terminal is less than the preset threshold, and if the distance is less than the preset threshold, the first terminal sends the data to the second terminal based on the device information of the second terminal. Alternatively, in some other embodiments, the first terminal may determine only whether the magnetic data of the first terminal and the magnetic data of the second terminal meet the preset correlation condition, and sends the data to the second terminal based on the device information of the second terminal if the magnetic data of the first terminal and the magnetic data of the second terminal meet the preset correlation condition. This is not limited in embodiments of this application.

It should be noted that, in some other embodiments, the first terminal may alternatively first determine whether the magnetic data of the first terminal and the magnetic data of the second terminal meet the preset correlation condition, and then determine whether the distance between the first terminal and the second terminal is less than the preset threshold. In other words, the first terminal determines the magnetic data of the first terminal in response to receiving the broadcast signal from the second terminal; determines whether the magnetic data of the first terminal and the magnetic data of the second terminal meet the preset correlation condition; determines whether the distance between the first terminal and the second terminal is less than the preset threshold in response to the magnetic data of the first terminal and the magnetic data of the second terminal meeting the preset correlation condition; and sends the data to the second terminal based on the device information of the second terminal in response to the distance being less than the preset threshold. A sequence of performing S505 and S506 is not limited in this embodiment of this application.

In this embodiment of this application, the solution is described by using an example in which the magnetic data of the first terminal and the magnetic data of the second terminal meet the preset correlation condition. In some other embodiments, when the magnetic data of the first terminal and the magnetic data of the second terminal do not meet the preset correlation condition, it means that the first terminal and the second terminal are not in the state of ultra-short distance. In this case, the condition for ultra-short distance transmission cannot be met, and a subsequent data sharing process in S507 and S508 does not need to be performed.

S507: The second terminal receives the data returned by the first terminal in response to the broadcast signal.

S508: The second terminal displays a second interface.

The second interface includes the data.

In some embodiments, the second terminal displays the data in the second interface. For example, the second terminal may display the data in the second interface in a full-screen display manner. For another example, the second terminal displays the data in the second interface in a half-screen display manner. For another example, the second terminal displays the data in the second interface in a floating window display manner. Certainly, in some other embodiments, the second terminal may alternatively display the data in another manner, for example, a pop-up window manner. This is not limited in embodiments of this application.

In some possible implementations, when the data is a picture, the second terminal displays the picture in the second interface.

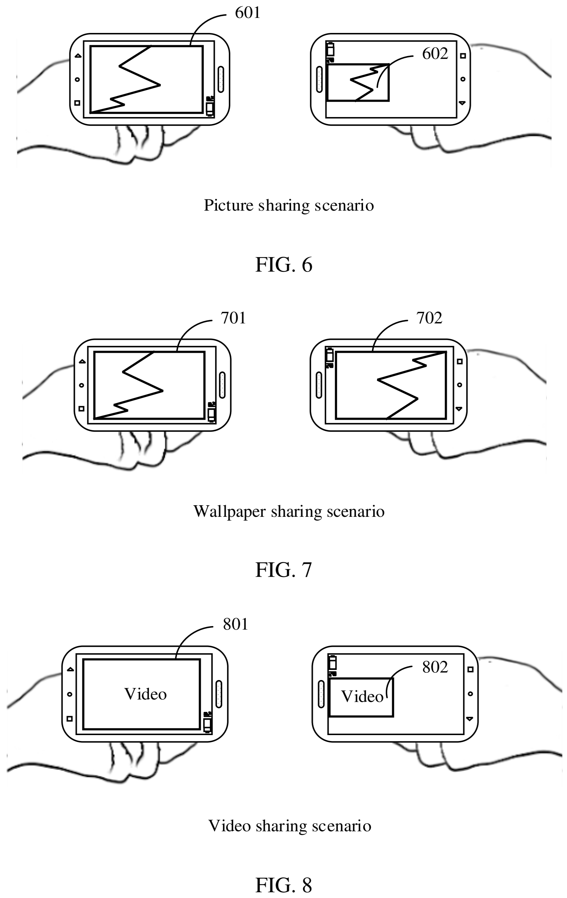

For example, FIG. 6 is a diagram of a picture sharing scenario according to an embodiment of this application. Refer to FIG. 6. For example, the first interface of the first terminal is a gallery interface. When the first terminal is close to the second terminal, the first terminal can be triggered to automatically transmit, to the second terminal, a picture 601 displayed in the gallery interface. Further, after the second terminal receives the picture 601, a picture 602 shown in FIG. 6 may be displayed in the second interface. The gallery interface may be a full-screen interface of any picture in a gallery application. It should be noted that, in FIG. 6, an example in which the picture 602 is displayed in a floating window is used to describe picture displaying.

For another example, FIG. 7 is a diagram of a wallpaper sharing scenario according to an embodiment of this application. Refer to FIG. 7. For example, the first interface of the first terminal is a lock screen interface. When the first terminal is close to the second terminal, the first terminal can be triggered to automatically transmit, to the second terminal, a wallpaper 701 displayed in the lock screen interface. Further, after the second terminal receives the wallpaper 701, a wallpaper 702 shown in FIG. 7 may be displayed in the second interface. It should be noted that, in FIG. 7, an example in which the wallpaper 702 is displayed in full screen is used to describe picture displaying.

In some other possible implementations, when the data is a video, the second terminal plays the video in the second interface.

A process in which the second terminal plays the video in the second interface may be: starting a browser, and playing the video in an interface of the browser; or starting a video application, and playing the video in an interface of the video application. Certainly, in some other embodiments, the video may alternatively be played in another manner. This is not limited in embodiments of this application.

For example, FIG. 8 is a diagram of a video sharing scenario according to an embodiment of this application. Refer to FIG. 8. For example, the first interface of the first terminal is a video interface. When the first terminal is close to the second terminal, the first terminal can be triggered to automatically transmit, to the second terminal, a video 801 played in the video interface. Further, after the second terminal receives the video 801, a video 802 shown in FIG. 8 may be played in the second interface. The video interface may be a video play interface, for example, a news play interface or a short video play interface. It should be noted that, in FIG. 8, an example in which the video 802 is played in a floating window is used to describe video playing.

In some other possible implementations, when the data is information about a wireless local area network, the second terminal displays the information about the wireless local area network in the second interface.

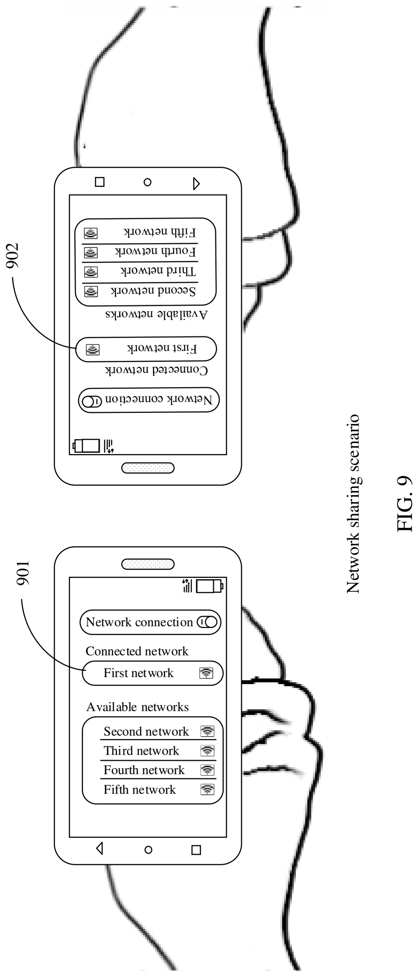

For example, FIG. 9 is a diagram of a network sharing scenario according to an embodiment of this application. Refer to FIG. 9. For example, the first interface of the first terminal is an information interface of the wireless local area network. When the first terminal is close to the second terminal, the first terminal can be triggered to automatically transmit, to the second terminal, information 901 about the wireless local area network displayed in the information interface of the wireless local area network. Further, after the second terminal receives the information 901 about the wireless local area network, information 902 about the wireless local area network shown in FIG. 9 may be displayed in the second interface. It should be noted that, in FIG. 9, an example in which the information 902 about the wireless local area network is displayed in full screen is used to describe display of the information about the wireless local area network.

In some other possible implementations, when the data is information about an electronic red envelope, the second terminal displays the information about the electronic red envelope in the second interface.

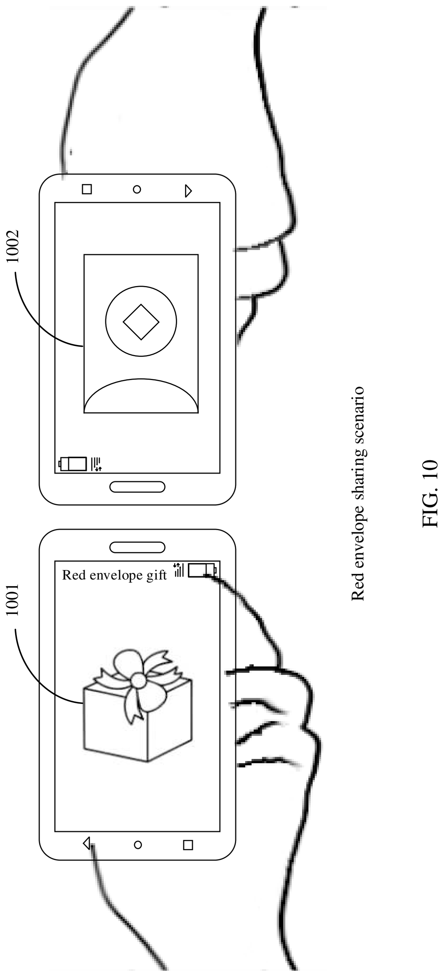

For example, FIG. 10 is a diagram of a red envelope sharing scenario according to an embodiment of this application. Refer to FIG. 10. For example, the first interface of the first terminal is an information interface of the electronic red envelope. When the first terminal is close to the second terminal, the first terminal can be triggered to automatically transmit, to the second terminal, information 1001 about the electronic red envelope displayed in the information interface of the electronic red envelope. Further, after the second terminal receives the information 1001 about the electronic red envelope, information 1002 about the electronic red envelope shown in FIG. 10 may be displayed in the second interface. It should be noted that, in FIG. 10, an example in which the information 1002 about the electronic red envelope is displayed in a pop-up window is used to describe display of the information about the electronic red envelope.

In some other possible implementations, when the data is information about a contact, the second terminal displays the information about the contact in the second interface.

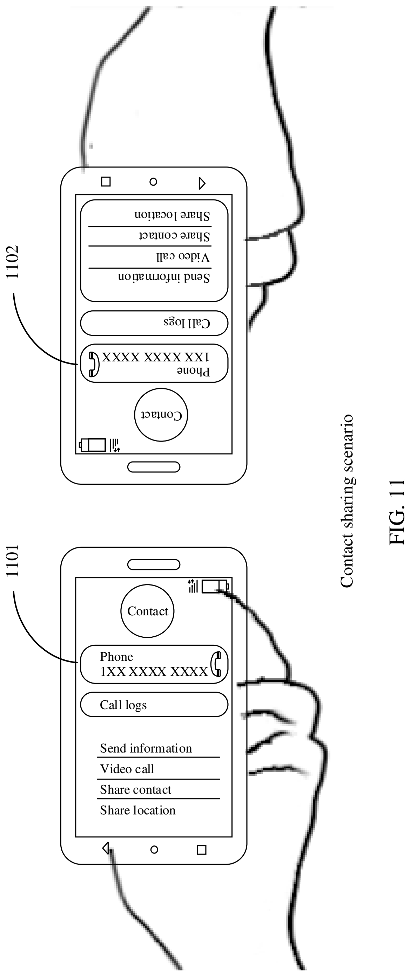

For example, FIG. 11 is a diagram of a contact sharing scenario according to an embodiment of this application. Refer to FIG. 11. For example, the first interface of the first terminal is an information interface of a contact. When the first terminal is close to the second terminal, the first terminal can be triggered to automatically transmit, to the second terminal, contact information 1101 displayed in the information interface of the contact. Further, after the second terminal receives the contact information 1101, contact information 1102 shown in FIG. 11 may be displayed in the second interface. It should be noted that, in FIG. 11, an example in which the contact information 1102 is displayed in full screen is used to describe display of the contact information.

Further, in some embodiments, the second terminal may further perform preset processing based on the data.

In some possible implementations, when the data is a picture, the second terminal further stores the picture in a local gallery. In this way, automatic storage of the picture can be implemented, and human-computer interaction efficiency is improved.

For example, when the picture is a wallpaper, the second terminal may further automatically set the received picture as the wallpaper.

In some other possible implementations, when the data is a video, the second terminal further stores the video in the local gallery. In this way, automatic storage of the video can be implemented, and human-computer interaction efficiency is improved.

In some other possible implementations, when the data is information about a wireless local area network, the second terminal further connects to the wireless local area network based on the information about the wireless local area network. In this way, automatic connection to the wireless local area network (for example, a wireless network or a hotspot) can be implemented, and human-computer interaction efficiency is improved.

In some other possible implementations, when the data is information about an electronic red envelope, the second terminal further obtains a red envelope amount corresponding to the electronic red envelope. In this way, automatic claiming of the electronic red envelope can be implemented, and human-computer interaction efficiency is improved.

In some other possible implementations, when the data is information about a contact, the second terminal further adds the information about the contact to a contact information base. In this way, the contact can be automatically added, and human-computer interaction efficiency is improved.

The technical solutions provided in embodiments of this application provide an efficient data sharing solution between terminal devices. When the second terminal detects that the ambient light data is less than the preset light intensity, the second terminal may be triggered to perform a process of sending the broadcast signal, so that another terminal device that may be close to the second terminal, for example, the first terminal, can detect the broadcast signal. Further, the first terminal can be triggered to automatically share data provided that the distance between the first terminal and the second terminal is less than the preset threshold and/or the magnetic data of the first terminal and the magnetic data of the second terminal meet the preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

Both the first terminal and the second terminal in embodiments of this application are provided with an application module, a Huawei Share module, a mobile sensing development platform, a sensor module, and a soft bus module.

The application module runs different types of applications, such as a gallery application, a video application, a settings application, a messages application, and a contacts application. In embodiments of this application, the solution is subsequently described by using the gallery application as an example.

The Huawei Share module is configured to provide a Huawei Share function, to implement data sharing between a current terminal device and another terminal device. It should be noted that, before this solution is implemented, both the first terminal and the second terminal need to enable the Huawei Share function of the Huawei Share module in advance.

The mobile sensing development platform is configured to provide a service of subscribing to a sensing function. For example, a user may subscribe to an ambient light sensing function, a magnetic sensing function, and the like of the terminal device via the mobile sensing development platform. After the subscription succeeds, the mobile sensing development platform can return a status of the terminal device to a subscriber after identifying the status of the terminal device, that is, return the status to the terminal device. It should be noted that, before this solution is implemented, both the first terminal and the second terminal need to pre-subscribe to a service of the sensing function.

The sensor module is configured to provide a sensor-based detection function, for example, provide an ambient light detection function of the ambient light sensor or a magnetic data detection function of the magnetometer sensor. It should be noted that, before this solution is implemented, both the first terminal and the second terminal need to enable the detection function of the sensor module in advance.

The soft bus module is configured to provide a soft bus-based data transmission function. In some embodiments, the soft bus module further provides a Bluetooth scanning and monitoring function, and the Bluetooth scanning and monitoring function is used to monitor a broadcast signal. It should be noted that, before this solution is implemented, both the first terminal and the second terminal need to enable the Bluetooth scanning and monitoring function of the soft bus module in advance.

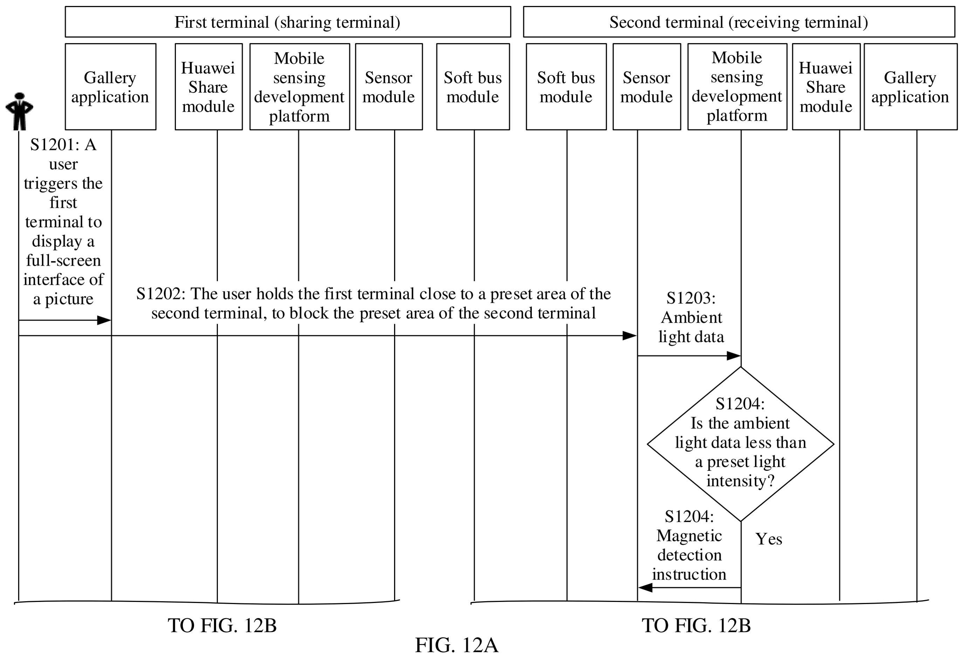

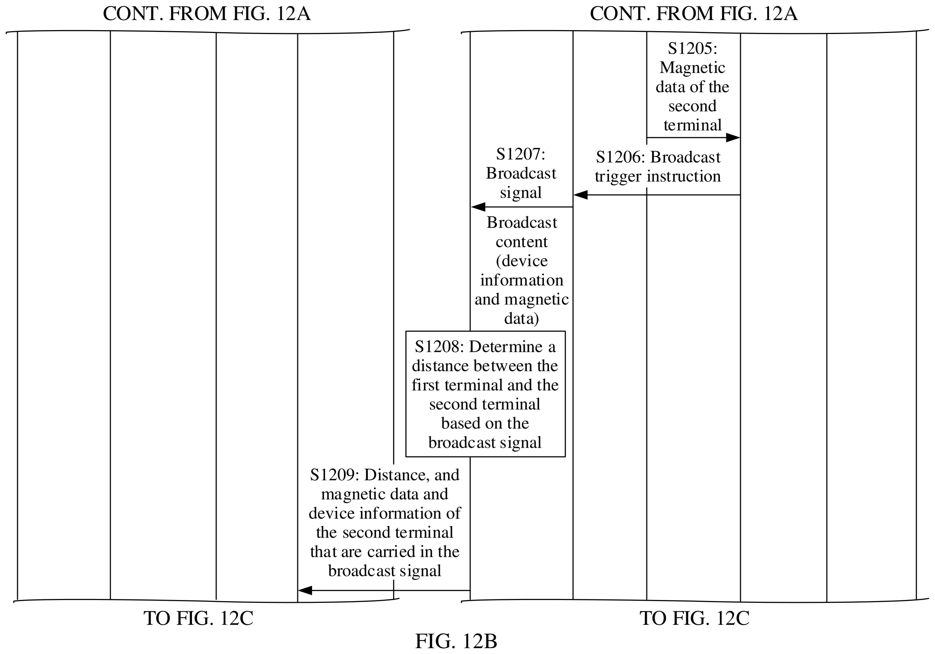

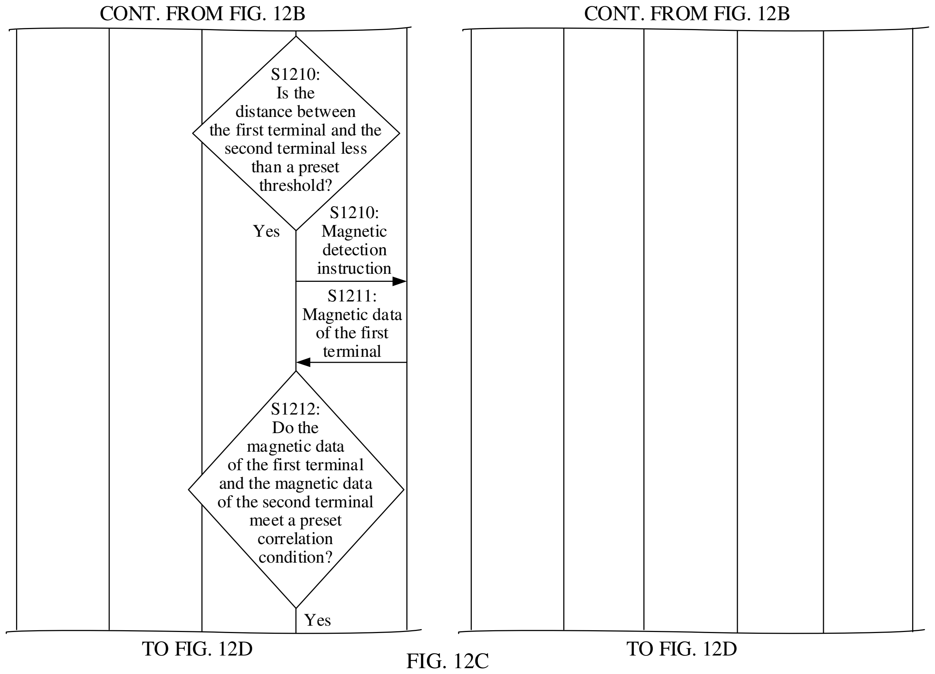

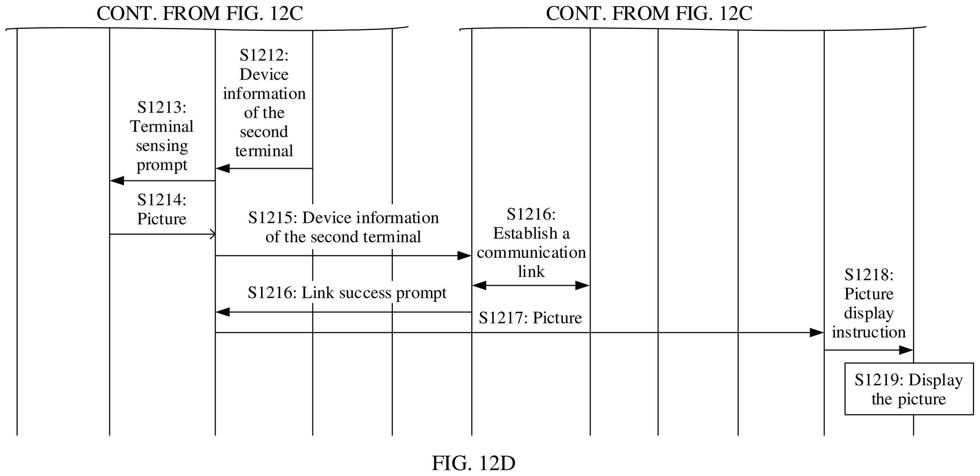

In an example, FIG. 12A to FIG. 12D are a schematic flowchart of data sharing according to an embodiment of this application. Refer to FIG. 12A to FIG. 12D. An interaction process between a gallery application, a Huawei Share module, a mobile sensing development platform, a sensor module, and a soft bus module that are set in each of a first terminal and a second terminal is used as an example to describe a data sharing procedure.

For example, a first interface is a full-screen display interface of a picture in the gallery application. The data sharing procedure may include the following S1201 to S1219.

S1201: A user triggers the first terminal to display the full-screen interface of the picture.

For example, the user may select a to-be-shared picture from the gallery application of the first terminal, and tap to preview the picture in full size, to trigger the first terminal to display the full-screen interface of the picture.

S1202: The user holds the first terminal close to a preset area of the second terminal, to block the preset area of the second terminal.

The preset area may be an upper part of a screen of the second terminal. In some other embodiments, the preset area may alternatively be set to another area, for example, the back of the screen. This is not limited in embodiments of this application.

S 1203: The sensor module of the second terminal obtains ambient light data of the preset area, and sends the obtained ambient light data to the mobile sensing development platform of the second terminal.

S1204: The mobile sensing development platform of the second terminal receives the ambient light data, determines whether the ambient light data is less than a preset light intensity, and sends a magnetic detection instruction to the sensor module of the second terminal in response to the ambient light data being less than the preset light intensity.

The magnetic detection instruction instructs to obtain magnetic data of the second terminal.

S1205: The sensor module of the second terminal receives the magnetic detection instruction, obtains the magnetic data of the second terminal, and sends the obtained magnetic data of the second terminal to the mobile sensing development platform of the second terminal.

S1206: The mobile sensing development platform of the second terminal receives the magnetic data of the second terminal, and sends a broadcast trigger instruction to the soft bus module of the second terminal.

The broadcast trigger instruction instructs to send a broadcast signal. The broadcast trigger instruction may carry the magnetic data of the second terminal.

S 1207: The soft bus module of the second terminal receives the broadcast trigger instruction, assembles device information of the second terminal and the magnetic data of the second terminal that is carried in the broadcast trigger instruction to form broadcast content, and sends a broadcast signal.

S1208: The soft bus module of the first terminal receives the broadcast signal, and determines a distance between the first terminal and the second terminal based on the broadcast signal.

S1209: The soft bus module of the first terminal sends, to the mobile sensing development platform of the first terminal, the distance between the first terminal and the second terminal, and the magnetic data and the device information of the second terminal that are carried in the broadcast signal.

S1210: The mobile sensing development platform of the first terminal receives the distance between the first terminal and the second terminal, and the magnetic data and the device information of the second terminal that are carried in the broadcast signal, and determines whether the distance between the first terminal and the second terminal is less than a preset threshold. In response to the distance being less than the preset threshold, the mobile sensing development platform of the first terminal sends a magnetic detection instruction to the sensor module of the first terminal.

The magnetic detection instruction instructs to obtain magnetic data of the first terminal.

S1211: The sensor module of the first terminal receives the magnetic detection instruction, obtains the magnetic data of the first terminal, and sends the obtained magnetic data of the first terminal to the mobile sensing development platform of the first terminal.

S1212: The mobile sensing development platform of the first terminal receives the magnetic data of the first terminal, determines whether the magnetic data of the first terminal and the magnetic data of the second terminal meet a preset correlation condition, and sends the device information of the second terminal to the Huawei Share module of the first terminal in response to the magnetic data of the first terminal and the magnetic data of the second terminal meeting the preset correlation condition.

S1213: The Huawei Share module of the first terminal receives the device information of the second terminal, and sends a terminal sensing prompt to the gallery application of the first terminal.

The terminal sensing prompt is used to prompt another terminal device that senses that a picture is allowed to be shared.

S1214: The gallery application of the first terminal receives the terminal sensing prompt, and sends a picture to the Huawei Share module of the first terminal.

S1215: The Huawei Share module of the first terminal receives the picture, and sends the device information of the second terminal to the soft bus module of the first terminal.

S1216: The soft bus module of the first terminal establishes a communication link to the soft bus module of the second terminal based on the device information of the second terminal, and sends a link success prompt to the Huawei Share module of the first terminal.

The link success prompt is used to prompt that the communication link is successfully established between the soft bus module of the first terminal and the soft bus module of the second terminal.

S1217: The Huawei Share module of the first terminal sends the picture to the Huawei Share module of the second terminal in response to successful establishment of the communication link between the soft bus module of the first terminal and the soft bus module of the second terminal.

S 1218: The Huawei Share module of the second terminal receives the picture, and sends a picture display instruction to the gallery application of the second terminal.

The picture display instruction instructs to display a picture.

S1219: The gallery application of the second terminal receives the picture display instruction, and displays the picture.

The technical solutions provided in embodiments of this application provide an efficient data sharing solution between terminal devices. When the second terminal detects that the ambient light data is less than the preset light intensity, the second terminal may be triggered to perform a process of sending the broadcast signal, so that another terminal device that may be close to the second terminal, for example, the first terminal, can detect the broadcast signal. Further, the first terminal can be triggered to automatically share data provided that the distance between the first terminal and the second terminal is less than the preset threshold and/or the magnetic data of the first terminal and the magnetic data of the second terminal meet the preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

It should be noted that the foregoing description is intended to describe the data sharing method described in embodiments of this disclosure more clearly, and should not be construed as a limitation on a specific implementation of this application.

The foregoing mainly describes the solutions provided in embodiments of this application from a perspective of the data sharing procedure of the first interface. Correspondingly, an embodiment of this application further provides a data sharing apparatus. The data sharing apparatus is configured to implement the foregoing methods. The data sharing apparatus may be the apparatus in the foregoing method embodiments, or may include the foregoing apparatus, or may be a component that can be used. It may be understood that, to implement the foregoing functions, the data sharing apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is executed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the data sharing apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is only logical function division. During actual implementation, there may be another division manner.

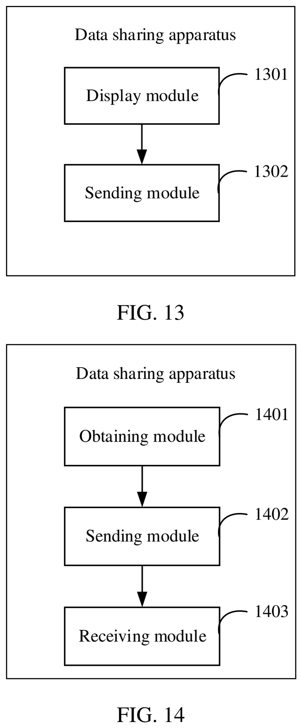

For example, FIG. 13 is a diagram of a structure of a data sharing apparatus according to an embodiment of this application. Refer to FIG. 13. The data sharing apparatus includes a display module 1301 and a sending module 1302.

The display module 1301 is configured to perform S401 shown in FIG. 4, S501 shown in FIG. 5A and FIG. 5B, or S1201 shown in FIG. 12A to FIG. 12D.

The sending module 1302 is configured to perform S404 shown in FIG. 4, S505 and S506 shown in FIG. 5A and FIG. 5B, or S1208 to S1217 shown in FIG. 12A to FIG. 12D.

The technical solutions provided in embodiments of this application provide an efficient data sharing solution between terminal devices. When a second terminal detects that ambient light data is less than a preset light intensity, the second terminal may be triggered to perform a process of sending a broadcast signal, so that another terminal device that may be close to the second terminal, for example, a first terminal, can detect the broadcast signal. Further, the first terminal can be triggered to automatically share data provided that a distance between the first terminal and the second terminal is less than a preset threshold and/or magnetic data of the first terminal and magnetic data of the second terminal meet a preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

In some possible implementations, the apparatus further includes a determining module, configured to perform the process of determining whether the preset condition is met in S404 shown in FIG. 4; the process of determining whether the distance between the first terminal and the second terminal is less than the preset threshold and determining whether the magnetic data of the first terminal and the magnetic data of the second terminal meet the preset correlation condition in S505 and S506 shown in FIG. 5A and FIG. 5B; or the process of determining whether the distance between the first terminal and the second terminal is less than the preset threshold and determining whether the magnetic data of the first terminal and the magnetic data of the second terminal meet the preset correlation condition in S1208 to S1217 shown in FIG. 12A to FIG. 12D.

In some possible implementations, the broadcast signal carries the magnetic data of the second terminal.

In some possible implementations, the broadcast signal further carries device information of the second terminal.

The sending module 1302 is specifically configured to perform the data sending process in S404 shown in FIG. 4, the data sending process in S506 shown in FIG. 5A and FIG. 5B, or the data sending process in S1217 shown in FIG. 12A to FIG. 12D.

For example, FIG. 14 is a diagram of a structure of a data sharing apparatus according to an embodiment of this application. Refer to FIG. 14. The data sharing apparatus includes an obtaining module 1401, a sending module 1402, and a receiving module 1403.

The obtaining module 1401 is configured to perform S402 shown in FIG. 4, S502 shown in FIG. 5A and FIG. 5B, or S1203 shown in FIG. 12A to FIG. 12D.

The sending module 1402 is configured to perform S403 shown in FIG. 4, S503 and S504 shown in FIG. 5A and FIG. 5B, or S1204 to S1207 shown in FIG. 12A to FIG. 12D.

The receiving module 1403 is configured to perform S405 shown in FIG. 4, S507 shown in FIG. 5A and FIG. 5B, or S1218 shown in FIG. 12A to FIG. 12D.

In some possible implementations, ambient light data is ambient light data of a preset area of a second terminal.

In some possible implementations, a broadcast signal carries magnetic data of the second terminal and/or device information of the second terminal.

In some possible implementations, the apparatus further includes a display module, configured to perform S508 shown in FIG. 5A and FIG. 5B or S1219 shown in FIG. 12A to FIG. 12D.

In some possible implementations, the apparatus further includes a processing module, configured to perform the process of performing preset processing on the data in S508 shown in FIG. 5A and FIG. 5B.

The technical solutions provided in embodiments of this application provide an efficient data sharing solution between terminal devices. When the second terminal detects that the ambient light data is less than a preset light intensity, the second terminal may be triggered to perform a process of sending the broadcast signal, so that another terminal device that may be close to the second terminal, for example, a first terminal, can detect the broadcast signal. Further, the first terminal can be triggered to automatically share data provided that a distance between the first terminal and the second terminal is less than a preset threshold and/or magnetic data of the first terminal and magnetic data of the second terminal meet a preset correlation condition. Further, the second terminal can automatically receive the data. In this way, data sharing between the first terminal and the second terminal is implemented, one-touch instant sharing based on two terminals is implemented, a procedure of data sharing between the two terminals is simplified, and human-machine interaction efficiency is improved.

For detailed descriptions of the foregoing optional implementations, refer to the foregoing method embodiments. Details are not described herein again. In addition, for descriptions of any data sharing apparatus provided above and descriptions of beneficial effect, refer to the foregoing corresponding method embodiments. Details are not described again.

For example, with reference to FIG. 3, some or all functions implemented by the display module 1301 and the sending module 1302 in the data sharing apparatus shown in FIG. 13, and the obtaining module 1401, the sending module 1402, and the receiving module 1403 in the data sharing apparatus shown in FIG. 14 may be implemented by the processor 310 in FIG. 3 by executing computer-executable instructions in the internal memory 321 in FIG. 3.

In embodiments of this application, the data sharing apparatus is presented in a form of functional modules through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the data sharing apparatus may be in a form of the terminal device shown in FIG. 3.

For example, the processor 310 in the terminal device shown in FIG. 3 may invoke computer-executable instructions stored in the internal memory 321, so that the terminal device performs the data sharing method in the foregoing method embodiments.

Specifically, functions/implementation processes of the display module 1301 and the sending module 1302 in the data sharing apparatus shown in FIG. 13, and the obtaining module 1401, the sending module 1402, and the receiving module 1403 in the data sharing apparatus shown in FIG. 14 may be implemented by the processor 310 in the terminal device shown in FIG. 3 by invoking the computer-executable instructions stored in the internal memory 321.

The data sharing apparatus provided in embodiments of this application may perform the foregoing data sharing method. Therefore, for technical effect that can be achieved by the data sharing apparatus, refer to the foregoing method embodiment. Details are not described herein again.

It should be understood that one or more of the modules or units may be implemented by software, hardware, or a combination thereof. When any one of the foregoing modules or units is implemented by using software, the software exists in a form of computer program instructions, and is stored in a memory. A processor may be configured to execute the program instructions and implement the foregoing method procedures. The processor may be built into a SoC (system on a chip) or an ASIC, or may be an independent semiconductor chip. In addition to cores used to execute the software instructions to perform operations or processing, the processor may further include a necessary hardware accelerator, for example, a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a terminal device (for example, the terminal device may be a chip or a chip system). The terminal device includes a processor, configured to perform the method in any one of the foregoing method embodiments. In a possible design, the terminal device further includes a memory. The memory is configured to store necessary program instructions and data. The processor may invoke program code stored in the memory, to indicate the terminal device to perform the method in any one of the foregoing method embodiments. Certainly, the memory may alternatively not be in the terminal device. When the terminal device is a chip system, the terminal device may include a chip, or may include a chip and another discrete device. This is not specifically limited in embodiments of this application.

An embodiment of this application further provides a computer-readable storage medium. The computer-readable storage medium stores computer-executable instructions. When the computer-executable instructions are run on a terminal device, the terminal device is enabled to perform any method performed by the data sharing apparatus provided above.

For any explanation of content related to the computer-readable storage medium provided above and descriptions of beneficial effect, refer to the foregoing corresponding embodiments. Details are not described herein again.

An embodiment of this application further provides a chip. The chip integrates a control circuit and one or more ports that are configured to implement a function of the foregoing data sharing apparatus. Optionally, for functions supported by the chip, refer to the foregoing descriptions. Details are not described herein again. A person of ordinary skill in the art may understand that all or some of the steps of the foregoing embodiments may be implemented by a program instructing related hardware. The program may be stored in a computer-readable storage medium. The storage medium mentioned above may be a read-only memory, a random access memory, or the like. The processing unit or the processor may be a central processing unit, a general-purpose processor, an application-specific integrated circuit (application-specific integrated circuit, ASIC), a microprocessor (digital signal processor, DSP), a field programmable gate array (field programmable gate array, FPGA), another programmable logic device, a transistor logic device, a hardware component, or any combination thereof.

An embodiment of this application further provides a computer program product including computer-executable instructions. When the computer-executable instructions are run on a terminal device, the terminal device is enabled to perform any method in the foregoing embodiments. The computer program product includes one or more computer-executable instructions. When the computer-executable instructions are loaded and executed on the terminal device, all or some of the procedures or functions according to the embodiments of this application are generated. The terminal device may be a general-purpose computer, a special-purpose computer, a computer network, or another programmable apparatus. The computer-executable instructions may be stored in a computer-readable storage medium, or transmitted from one computer-readable storage medium to another computer-readable storage medium. For example, the computer-executable instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a server, or may be a data storage device like a server or a data center that can be integrated with one or more media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It should be noted that all the foregoing components provided in embodiments of this application and configured to store the computer instructions or the computer program, such as, but not limited to the memory, the computer-readable storage medium, and a communication chip, are non-transitory (non-transitory).

All or some of the foregoing embodiments may be implemented by using software, hardware, firmware, or any combination thereof. When a software program is used to implement embodiments, embodiments may be implemented completely or partially in a form of a computer program product.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data sharing method, applied to a first terminal and comprising:
displaying a first interface, wherein the first interface comprises to-be-shared data; and
sending the data to a second terminal in response to a preset condition being met, wherein
the preset condition comprises one or more of the following: a distance that is between the first terminal and the second terminal and that is indicated by a broadcast signal from the second terminal is less than a preset threshold, and magnetic data of the first terminal and magnetic data of the second terminal meet a preset correlation condition.

2. The method according to claim 1, wherein the method further comprises:
in response to receiving the broadcast signal from the second terminal, determining whether the distance that is between the first terminal and the second terminal and that is indicated by the broadcast signal is less than the preset threshold, and determining whether the magnetic data of the first terminal and the magnetic data of the second terminal meet the preset correlation condition.

3. The method according to claim 1 or 2, wherein the broadcast signal carries the magnetic data of the second terminal.

4. The method according to any one of claims 1 to 3, wherein the broadcast signal further carries device information of the second terminal; and
sending the data to the second terminal comprises:
sending the data to the second terminal based on the device information of the second terminal.

5. A data sharing method, applied to a second terminal and comprising:
obtaining ambient light data;
sending a broadcast signal in response to the ambient light data being less than a preset light intensity, wherein the broadcast signal indicates a distance between a first terminal and the second terminal; and
receiving data returned by the first terminal in response to the broadcast signal.

6. The method according to claim 5, wherein the ambient light data is ambient light data of a preset area of the second terminal.

7. The method according to claim 5 or 6, wherein the broadcast signal carries magnetic data of the second terminal and/or device information of the second terminal.

8. The method according to any one of claims 5 to 7, wherein after receiving the data returned by the first terminal in response to the broadcast signal, the method further comprises:
displaying a second interface, wherein the second interface comprises the data.

9. The method according to claim 8, wherein the method further comprises:
performing preset processing based on the data, comprising
when the data is a picture, storing the picture in a local gallery;
when the data is a video, storing the video in the local gallery;
when the data is information about a wireless local area network, connecting to the wireless local area network based on the information about the wireless local area network;
when the data is information about an electronic red envelope, obtaining a red envelope amount corresponding to the electronic red envelope; and
when the data is information about a contact, adding the information about the contact to a contact information base.

10. A data sharing system, comprising a first terminal and a second terminal, wherein
the second terminal obtains ambient light data;
the second terminal sends a broadcast signal in response to the ambient light data being less than a preset light intensity, wherein the broadcast signal indicates a distance between the first terminal and the second terminal;
the first terminal displays a first interface, wherein the first interface comprises to-be-shared data;
the first terminal sends the data to the second terminal in response to the distance that is between the first terminal and the second terminal and that is indicated by the broadcast signal from the second terminal being less than a preset threshold, and magnetic data of the first terminal and magnetic data of the second terminal meeting a preset correlation condition; and
the second terminal receives the data returned by the first terminal in response to the broadcast signal.

11. A terminal device, comprising a memory and a processor, wherein the memory is connected to the processor, the memory is configured to store computer-executable instructions, and the processor is configured to invoke the computer-executable instructions to perform the method according to any one of claims 1 to 4 or claims 5 to 9.

12. A computer-readable storage medium, comprising computer-executable instructions, wherein when the computer-executable instructions are run on a terminal device, the terminal device is enabled to perform the method according to any one of claims 1 to 4 or claims 5 to 9.

13. A computer program product, comprising computer-executable instructions, wherein when the computer-executable instructions are run on a terminal device, the terminal device is enabled to perform the method according to any one of claims 1 to 4 or claims 5 to 9.
